# EUROPEAN PATENT APPLICATION

(11) **EP 2 592 328 A1**
(43) Date of publication of application: **15.05.2013**
(21) Application number: 11803671.4
(22) Date of filing: 07.07.2011
(51) Int. Cl.: F21S 2/00, F21V 7/00, G01N 21/84, G02B 5/02, G02B 5/08, F21Y 101/02

(54) **INDIRECT ILLUMINATION DEVICE AND ARTICLE INSPECTION SYSTEM USING SAME**

(30) Priority: 08.07.2010 JP 2010155419
(71) Applicant: Imac Co., Ltd., Moriyama-shi, Shiga 524-0215 (JP)
(72) Inventor: KUTANI Tsuyoshi, Moriyama-shi, Shiga 524-0215 (JP)
(74) Representative: Stöckeler, Ferdinand
(86) International application number: PCT/JP2011/065622
(87) International publication number: WO 2012/005337

(57) **Abstract**

Disclosed is an indirect illumination device that can reduce unnecessary shadow patterns on an article and inspect the article from a plurality of directions in order to perform a more detailed inspection. This indirect illumination device (1) includes a casing (2) and an illuminating lamp (3) provided on the lower inside of the casing (2). The casing (2) has a reflective surface (2a) that is disposed on an inner side of the casing (2) so as to reflect the light radiated from the illuminating lamp (3) towards the vicinity of a central position of the casing (2). The reflective surface (2a) is formed to be continuous from a topmost section (2aa) and has a one-way mirror function. A light diffuser (7) is provided between the reflective surface (2a) of the casing (2) and the illuminating lamp (3).

## Description

### TECHNICAL FIELD

The present invention relates to an indirect illumination device that emits indirect light to an article and an article inspection system using the same.

### BACKGROUND ART

In the related art, in order to inspect defects, appearance, characters, symbols, position, dimensions, adhering contamination of an article (product) produced in a factory, various illumination devices have been used according to the shape and structure of the article, inspection content, and the like. Among these devices, an indirect illumination device which includes a reflective surface and in which the light of an illuminating lamp is reflected from the reflective surface so as to illuminate an article from a plurality of directions has been used (for example, see FIGS. 1 and 2 of Patent Document 1 and FIG. 5 of Patent Document 2)

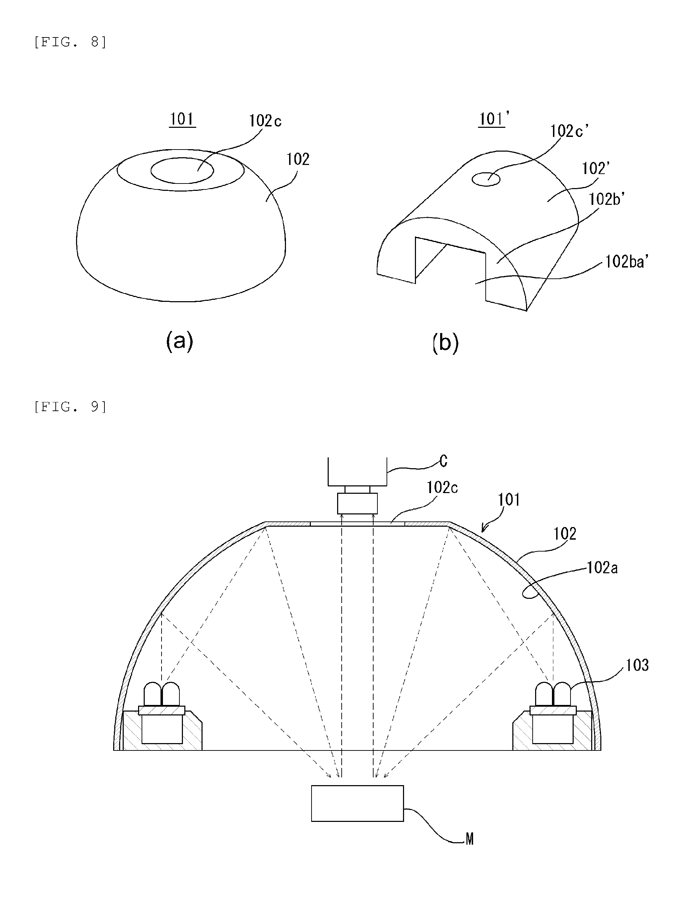

FIGS. 8 to 11 show two typical conventional examples of such an indirect illumination device. An indirect illumination device 101 shown in FIGS. 8(a) and 9 includes a casing 102 having an approximately hemispherical form and an illuminating lamp 103 provided on the lower inside of the casing 102. The casing 102 includes a reflective surface 102a that is disposed on an inner side so as to reflect the light (direct light) radiated from the illuminating lamp 103 towards the vicinity of a central position of the casing 102. A portion near a topmost section of the casing 102 is flat. When an article M is disposed near the central position of the casing 102, the light (indirect light) reflected from the reflective surface 102a is emitted to the article M.

The illuminating lamp 103 on the lower inside of the casing 102 of the indirect illumination device 101 is provided in a ring form. An inspection hole 102c is formed at the apex of the casing 102, and a camera C is provided above the inspection hole 102c. The light (depicted by a broken line in the figure) from the illuminating lamp 103 is reflected from the reflective surface 102a of the casing 102, and the reflected light (indirect light) is emitted to the article M from a plurality of directions. In the figure, two rows of LEDs are disposed in a ring form to form the illuminating lamp 103. Moreover, the reflective surface 102a may be subjected to various processing such as surface processing to form a micro-uneven surface so that light is diffusely reflected.

Moreover, an indirect illumination device 101' shown in FIGS. 8(b), 10, and 11 includes a casing 102' having an approximately semi-cylindrical form and an illuminating lamp 103' provided on the lower inside of the casing 102'. The casing 102' includes a reflective surface 102a' that is disposed on an inner side so as to reflect direct light from the illuminating lamp 103' towards the vicinity of a central position of the casing 102'. Moreover, the casing 102' has end side walls 102b'. This indirect illumination device 101' is preferable when an article M to be inspected is long. When the article M is disposed near the central position of the casing 102', light (indirect light) reflected from the reflective surface 102a' is emitted to the article M.

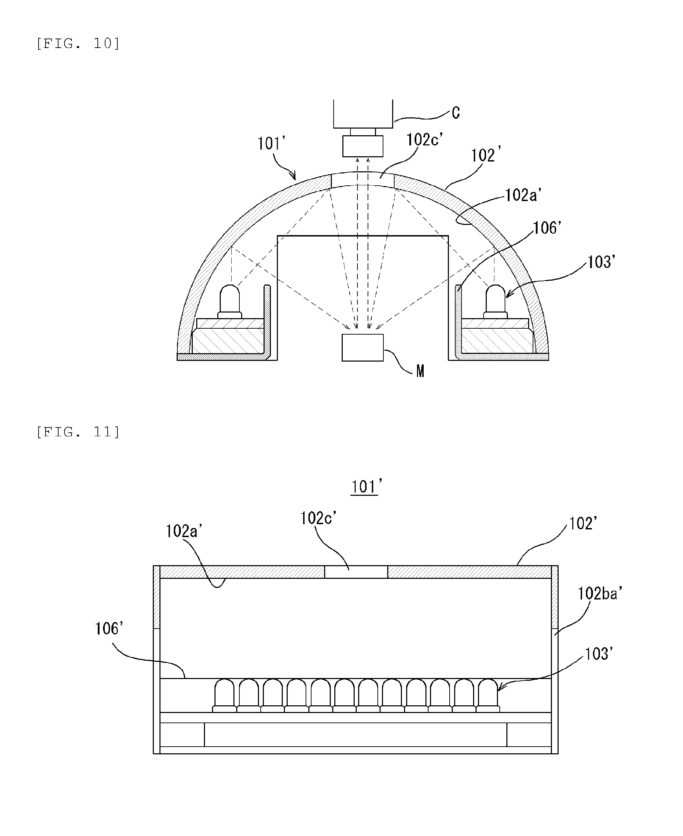

As shown in FIGS. 10 and 11, the illuminating lamp 103' on the lower inside of the casing 102' of the indirect illumination device 101' is provided such that a linear lamp is disposed symmetrical about an axial line (the central line in the longitudinal direction) of the casing 102'. An inspection hole 102c' is formed at the apex of the casing 102', and a camera C is provided above the inspection hole 102c'. Gateways (entry or exit ports) 102ba' are formed in the end side walls 102b' of the casing 102'. The light (depicted by a broken line in the figure) from the illuminating lamp 103' is reflected from the reflective surface 102a' of the casing 102', and the reflected light (indirect light) is emitted to the article M from a plurality of directions. Moreover, the reflective surface 102a' may be subjected to various processing such as surface processing to form a micro-uneven surface so that light is diffusely reflected. Reference numeral 106' in the figure is a shielding plate, and the shielding plate 106' is transparently depicted in FIG. 11.

In such an indirect illumination device, since indirect light is emitted to the article M from a plurality of directions, the glare of light on the surface of the article M is reduced, shadow is unlikely to occur, and it becomes easy to perform detailed inspection.

### PRIOR ART DOCUMENTS

### PATENT DOCUMENTS

Patent Document 1: Japanese Patent Application Laid-open No. 2004-125644
Patent Document 2: Japanese Patent Application Laid-open No. 2007-234342

### SUMMARY OF THE INVENTION

### PROBLEM TO BE SOLVED BY THE INVENTION

However, in practice, the indirect light becomes non-uniform due to the inspection hole 102c, and unnecessary shadow patterns are often visible on the article M. Moreover, since only one inspection hole 102c is formed at the apex, it is not possible to inspect the article M from a plurality of directions.

The present invention has been made in view of the foregoing, and an object of the present invention is to provide an indirect illumination device that can reduce unnecessary shadow patterns on an article and inspect the article from a plurality of directions in order to perform a more detailed inspection and to provide an article inspection system using the same.

### MEANS FOR SOLVING THE PROBLEM

In order to attain the object, an indirect illumination device according to a preferred embodiment of the present invention includes a casing; and an illuminating lamp provided on a lower inside of the casing, wherein the casing has a reflective surface that is disposed on an inner side of the casing so as to reflect light radiated from the illuminating lamp towards the vicinity of a central position of the casing, and the reflective surface is formed to be continuous from a topmost section, and at least a partial area thereof has a one-way mirror function.

Preferably, a light diffuser is provided between the reflective surface of the casing and the illuminating lamp.

Preferably, the reflective surface is a concave curved surface. Alternatively, preferably, the reflective surface is a flat surface.

Preferably, an entire area of the reflective surface has a one-way mirror function. Alternatively, preferably, one or a plurality of partial areas of the reflective surface have a one-way mirror function, and the other area is a total reflection area. Alternatively, preferably, a number of small areas of the reflective surface have a one-way mirror function, and the areas are disposed in a distributed manner.

Preferably, a proportion of reflectance to transmittance in areas of the reflective surface which have a one-way mirror function changes according to a position.

Preferably, the casing has an anti-reflection coating film that is formed on an outer side of the casing. Alternatively, preferably, the casing has a number of dimples that are disposed on an outer side of the casing.

An article inspection system according to a preferred embodiment of the present invention includes the indirect illumination device described above; and a camera that receives light having passed through the casing of the indirect illumination device to capture an image so as to inspect an article disposed inside the casing.

Preferably, the camera captures an image of the article from a plurality of directions while moving around the casing of the indirect illumination device, or a plurality of the cameras is provided around the casing of the indirect illumination device to capture an image of the article.

### EFFECTS OF THE INVENTION

According to the indirect illumination device and the article inspection system according to the present invention, since the concave curved surface of the casing that reflects light from the illuminating lamp does not require an inspection hole, unnecessary shadow patterns on the article are reduced very much. Thus, it is possible to perform a more detailed inspection. And, since the article can be perceived from all positions outside the casing, it is possible to inspect the article from a plurality of directions.

### BRIEF DESCRIPTION OF DRAWINGS

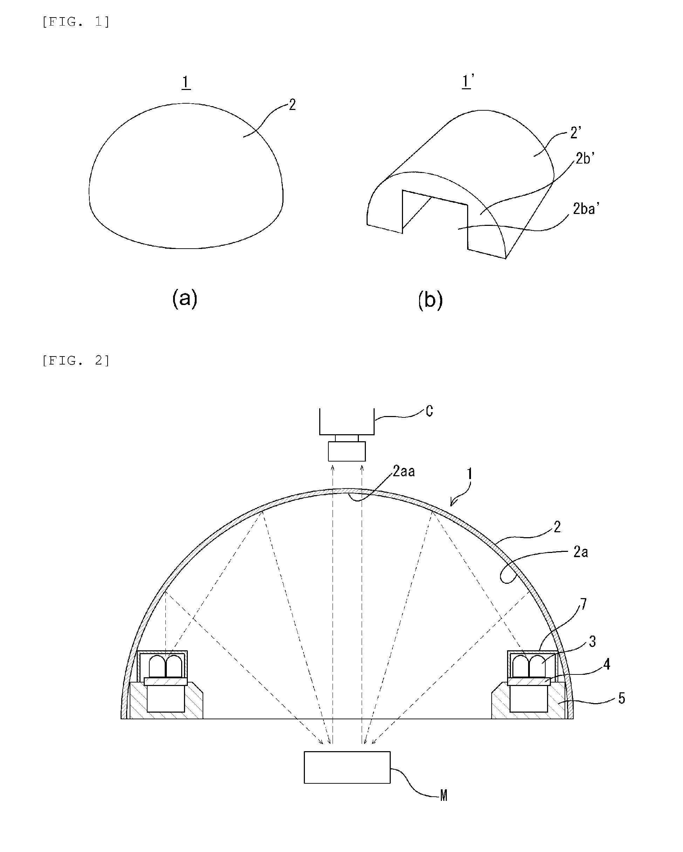

FIG. 1(a) is an external view of an indirect illumination device 1 according to a first embodiment of the present invention and FIG. 1(b) is an external view of an indirect illumination device 1' according to a second embodiment of the present invention;
FIG. 2 is a schematic cross-sectional view showing an article inspection system using the indirect illumination device 1;

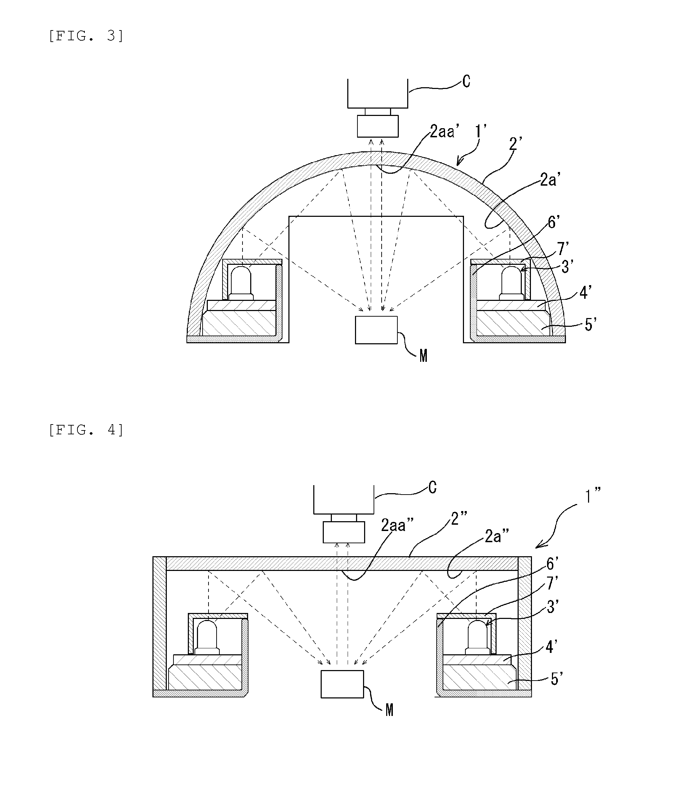

FIG. 3 is a schematic cross-sectional view showing an article inspection system using the indirect illumination device 1';
FIG. 4 is a schematic cross-sectional view of an article inspection system using an indirect illumination device 1" according to a third embodiment of the present invention;

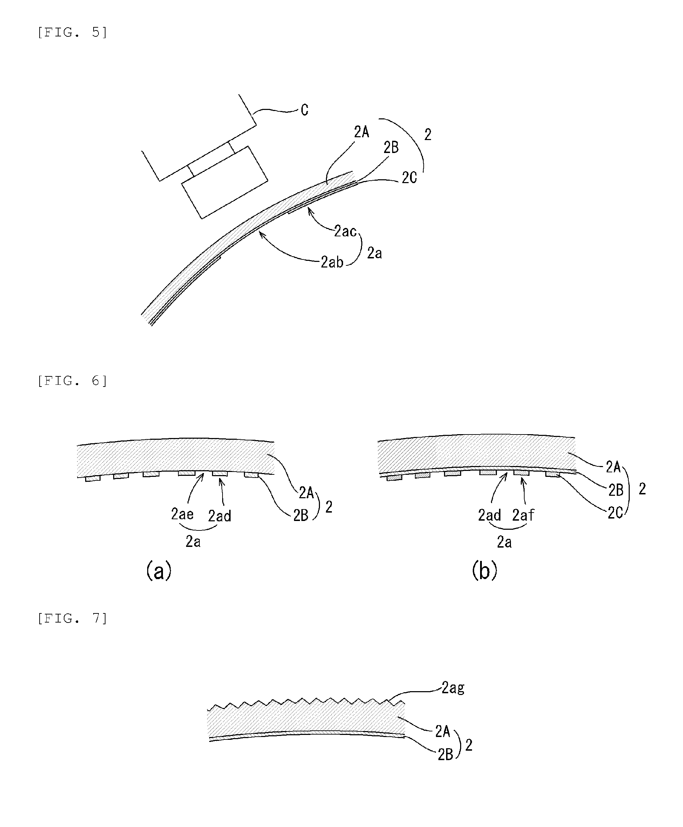

FIG. 5 is a schematic view showing a portion of an article inspection system using a modification of a reflective surface 2a of a casing 2 of the indirect illumination device 1;
FIG. 6(a) and 6(b) are enlarged simplified cross-sectional views showing another modification of the reflective surface 2a of the casing 2 of the indirect illumination device 1;
FIG. 7 is an enlarged simplified cross-sectional view showing a modification of an outer side of the casing 2 of the indirect illumination device 1;
FIG. 8(a) is an external view of an indirect illumination device 101 according to the conventional art and FIG. 8(b) is an external view of an indirect illumination device 101' according to the conventional art;
FIG. 9 is a schematic cross-sectional view showing an article inspection system using the indirect illumination device 101;
FIG. 10 is a schematic cross-sectional view showing an article inspection system using the indirect illumination device 101'; and
FIG. 11 is a cross-sectional view of the indirect illumination device 101' taken along a plane orthogonal to FIG. 10.

### DESCRIPTION OF EMBODIMENTS

Hereinafter, preferred embodiments for implementing the present invention will be described. As shown in FIGS. 1(a) and 2, an indirect illumination device 1 according to a first embodiment of the present invention includes a casing 2 and an illuminating lamp 3 provided on the bottom inside of the casing 2. The casing 2 includes a reflective surface 2a that is disposed on the inner side so as to reflect the light (direct light) radiated from the illuminating lamp 3 towards the vicinity of a central position of the casing 2. The reflective surface 2a is continuous from a topmost section 2aa. When an article M is disposed in the vicinity of the central position of the casing 2, the light (indirect light) reflected from the reflective surface 2a is emitted to the article M.

The casing 2 has an approximately hemispherical (hemispherical or semi-oval) appearance, and the reflective surface 2a is a concave curved surface. The reflective surface 2a of the casing 2 has a one-way mirror function. That is, the reflective surface 2a having the one-way mirror function reflects part of the direct light from the illuminating lamp 3 and transmits a remaining part of the direct light. A specific structure for providing the one-way mirror function is well known. For example, the structure can be obtained by forming a base portion in a portion of the casing 2 where the reflective surface 2a is provided using a transparent synthetic resin and attaching a semi-reflective member to the inner side of the base portion by depositing a thin metal film to the inner side. Moreover, a desired proportion of reflectance to transmittance (for example, approximately 50% respectively) can be obtained according to the type, a surface state, and thickness of a semi-reflective member.

The illuminating lamp 3 is arranged on the lower inside of the casing 2 in a ring form. The illuminating lamp 3 may be a fluorescent lamp, a halogen lamp, and the like but is preferably formed of a plurality of LEDs. This is because LEDs are quickly lit, produce little flickering, and are likely to provide a desired luminance and a desired radiation wavelength (of various colors of white, red, blue, green, near-infrared color, near-ultraviolet color, light-bulb color, and the like). Further, LEDs have a long lifespan. Although the figure shows two rows of adjacent LEDs being disposed in a ring form to form the illuminating lamp 3, one or three or more rows of adjacent LEDs may be disposed in a ring form.

In the figure, reference numeral 4 is a wiring board for mounting the LEDs, and reference numeral 5 is a base for fixing the wiring board 4. The shape and material of the base 5 are selected such that the strong direct light from the illuminating lamp 3 is prevented from directly striking the article M which is disposed in the vicinity of the central position of the casing 2 and inspected.

In an article inspection system using such an indirect illumination device 1, a camera C is provided outside the casing 2 so as to capture an image of the article M disposed in the vicinity of the central position of the casing 2 and to inspect the article M. That is, when the illuminating lamp 3 is lit, part of the direct light from the illuminating lamp 3 is reflected from the reflective surface 2a, and the reflected light (indirect light) is emitted to the article M from a plurality of directions. As a result, the glare of light on the surface of the article M is reduced, shadow is unlikely to occur, and unnecessary shadow patterns resulting from the inspection hole as described in the conventional art may not occur. Part of the light reflected from the article M passes through the reflective surface 2a of the casing 2, which is input to the camera C and is captured as an image. By doing so, it is possible to inspect the article M in a more detailed manner.

Moreover, the camera C can be disposed at all positions as well as the outside of the topmost section 2aa of the reflective surface 2a of the casing 2 and can capture an image of the article M from a plurality of directions to inspect the article M. For example, when the camera C is configured to capture the image of the article M from a plurality of directions by automatically moving around the casing 2, various images of the article M can be obtained. Moreover, when a plurality of cameras is provided around the casing 2 at optional angles, positions, and directions to capture the images of the article M, it is possible to inspect a plurality of items concurrently.

Since only part of the light radiated from the illuminating lamp 3 is emitted to the article M as the indirect light, the illuminance on the article M is likely to decrease as compared to the conventional example when the same illuminating lamp 3 is used. To solve this problem, the luminosity of the illuminating lamp 3 may be increased according to a performance of the camera C.

Moreover, in the indirect illumination device 1, it is preferable to provide a light diffuser 7 between the reflective surface 2a of the casing 2 and the illuminating lamp 3 so as to diffuse light. For example, the light diffuser 7 may cover the illuminating lamp 3. Well-known materials can be used for the light diffuser 7, and examples thereof include an acrylic resin and a polycarbonate resin.

By the light diffuser 7 diffusing the light radiated from the illuminating lamp 3, the indirect light is made more uniform, which reduces the glare of light further and makes shadow unlikely to occur. Moreover, since no processing for allowing light to be diffusely reflected is performed on the reflective surface 2a of the casing 2, it may not cause a problem in allowing the camera C to capture the image of the article M.

The light diffuser 7 is particularly effective when the LEDs used in the illuminating lamp 3 have high luminance. The illuminating lamp 3 in which a plurality of high-luminance LEDs is arrayed may produce a sparse (non-uniform) light intensity pattern depending on a position. Thus, unless the light diffuser 7 is provided, the indirect light on the article M may become sparse, and the sparse direct light of the illuminating lamp 3 may pass through the reflective surface 2a of the casing 2. Thus, unless the light diffuser 7 is provided, the sparse light may be radiated to the outside and be input to the camera C.

Next, an indirect illumination device 1' according to a second embodiment of the present invention will be described. As shown in FIGS. 1(b) and 3, the indirect illumination device 1' includes a casing 2' and an illuminating lamp 3' provided on the lower inside of the casing 2'. The casing 2' includes a reflective surface 2a' that is disposed on the inner side so as to reflect direct light from the illuminating lamp 3' towards the vicinity of the central position of the casing 2'. The reflective surface 2a' is continuous from a topmost section 2aa'. When an article M is disposed in the vicinity of the central position of the casing 2', the indirect light reflected from the reflective surface 2a' is emitted to the article M.

The casing 2' has an approximately semi-cylindrical appearance and the reflective surface 2a' is a concave curved surface. The reflective surface 2a' of the casing 2' has the same one-way mirror function as the reflective surface 2a of the previous embodiment. Moreover, end side walls 2b' are formed in the casing 2', and gateways (entry or exit ports) 2ba' are formed in the vicinity of approximately the center of the end side walls 2b'.

The illuminating lamp 3' is provided on the lower inside of the casing 2' such that a linear lamp is symmetrical about an axial line (the central line in the longitudinal direction) of the approximately semi-cylindrical casing 2'. Moreover, the illuminating lamp 3' is preferably formed of LEDs similarly to the illuminating lamp 3 of the previous embodiment, and two or more rows of adjacent LEDs may be disposed in a linear form.

Moreover, in the figure, reference numeral 4' is a wiring board for mounting the LEDs, reference numeral 5' is a base for fixing the wiring board 4', and reference numeral 6' is a shielding plate that prevents the direct light from the illuminating lamp 3' from directly striking the article M which is disposed in the vicinity of the central position of the casing 2' and inspected.

This indirect illumination device 1' can form the same article inspection system as the above-described article inspection system using the indirect illumination device 1 and can obtain the same advantages. In the indirect illumination device 1', the article M which is conveyed by a belt conveyer or the like and introduced into the casing 2' from one gateway 2ba' is inspected in the vicinity of the central position of the casing 2' and taken out from the other gateway 2ba'. Moreover, similarly to the light diffuser 7 of the indirect illumination device 1, it is preferable to provide a light diffuser 7' between the reflective surface 2a' of the casing 2' and the illuminating lamp 3' so as to diffuse light.

Although the indirect illumination devices 1 and 1' described above are an improvement of the two typical conventional examples, the present invention may be implemented as other embodiments. For example, the casing 2 of the indirect illumination device 1 may be modified to have an approximately trigonal pyramid form. Moreover, the gateways 2ba' may not be formed in the end side walls 2b' of the casing 2' of the indirect illumination device 1', and the end side walls 2b' themselves may not be provided.

As one of the other embodiments, an indirect illumination device 1" according to a third embodiment of the present invention will be described. As shown in FIG. 4, the indirect illumination device 1" is not provided with the end side walls 2b' of the casing 2' of the indirect illumination device 1', and has such an appearance that forms a half of an approximately square tube. A reflective surface 2a" of a casing 2" of the indirect illumination device 1" is a flat surface that includes a topmost section 2aa". The other configurations are the same as those of the indirect illumination device 1'. This indirect illumination device 1" can form the same article inspection system as the article inspection system using the indirect illumination device 1' and can obtain the same advantages.

The structure of the casing 2 (and 2' and 2") of the indirect illumination device 1 (and 1' and 1") can be modified. Hereinafter, although the casing 2 will be described as a representative example, the same is true for the casings 2' and 2".

The proportion of reflectance to transmittance on the reflective surface 2a that has the one-way mirror function of the casing 2 can be changed depending on a position. For example, the reflectance in the vicinity of the topmost section 2aa may be increased to be higher than that of a peripheral portion of the casing 2 so that the amount of light emitted to the article M disposed at the central position of the casing 2 from right above the article M can be increased.

Moreover, although the entire area of the reflective surface 2a of the casing 2 described above has the one-way mirror function, one or a plurality of specific areas 2ab of the reflective surface 2a of the casing 2 may have the one-way mirror function as shown in FIG. 5, and the other area may be configured as a total reflection area 2ac that reflects approximately the entire light as long as the unnecessary shadow patterns on the article M do not cause any problem. This is because in the case of the indirect illumination device 1, the illuminance on the article M is likely to decrease as compared to the conventional example as described above, the one-way mirror function is provided to only the specific area 2ab corresponding to the position of the camera C. In this case, the reflective surface 2a can be formed as shown in FIG. 5, for example, by attaching a semi-reflective member 2B to the inner side of a base portion 2A of a transparent synthetic resin, attaching a total-reflection member 2C to the semi-reflective member 2B, and performing screen printing or the like so that only the total-reflection area 2ac of the total-reflection member 2C is left.

Moreover, a number of small areas 2ad (very smaller than the light entrance area of the camera C) of the reflective surface 2a of the casing 2 may have the one-way mirror function, and the areas 2ad may be disposed in a distributed manner. The other area of the areas 2ad that have the one-way mirror function may be configured as a transparent area 2ae that transmits approximately the entire light or as a total-reflection area 2af that reflects approximately the entire light. By doing so, the proportion of reflectance to transmittance of the reflective surface 2a can be adjusted. When the other area of the areas 2ad is configured as the transparent area 2ae, the reflective surface 2a can be formed as shown in FIG. 6(a), for example, by performing screen printing or the like on the semi-reflective member 2B attached to the inner side of the base portion 2A of a transparent synthetic resin so that only the small areas 2ad are left. When the other area of the areas 2ad is configured as the total-reflection area 2af, the reflective surface 2a can be formed as shown in FIG. 6(b), for example, by attaching the semi-reflective member 2B to the inner side of the base portion 2A of a transparent synthetic resin, attaching the total-reflection member 2C to the semi-reflective member 2B, and performing screen printing or the like so that only the total-reflection area 2af of the total-reflection member 2C is left.

Moreover, the casing 2 may have an anti-reflection coating film that is formed on an outer side of the casing 2. This is to transmit the light from the inside which forms the image of the article M without reflecting the light and to prevent outside light from being reflected from the casing 2 to be input to the camera C. Moreover, since the anti-reflection coating film does not reflect the light from the inside, it is possible to prevent a ghost phenomenon which may occur when the reflected light is reflected again from the semi-reflective member on the inner side and is input to the camera C.

Moreover, a number of dimples 2ag (having a width very smaller than the light entrance area of the camera C) may be formed on the outer side of the casing 2. This is provided instead of the anti-reflection coating film so as to reduce outside light that may be reflected from the casing 2 and be input to the camera C and so as to reduce a ghost phenomenon. The dimples 2ag may be V-shaped grooves (as seen from the width direction) as shown in FIG. 7, for example, but the shape thereof is not particularly limited.

Although the indirect illumination device according to the embodiments of the present invention has been described, the present invention is not limited to the embodiments, and various changes in design can be made within the scope of the appended claims. For example, the indirect illumination device 1 (or 1' and 1") may have various sizes according to the size of a target article M. Moreover, the indirect illumination device 1 (or 1' and 1") may be applied to purposes (for example, display illumination) other than article inspection.

### DESCRIPTION OF REFERENCE NUMERALS

| | |
|---|---|
| 1: | INDIRECT ILLUMINATION DEVICE |
| 2: | CASING |
| 2a: | REFLECTIVE SURFACE OF CASING 2 |
| 3: | ILLUMINATING LAMP |
| 7: | LIGHT DIFFUSER |
| C: | CAMERA |
| M: | ARTICLE UNDER INSPECTION |

## Claims

1. An indirect illumination device comprising:
a casing; and
an illuminating lamp provided on a lower inside of the casing, wherein
the casing has a reflective surface that is disposed on an inner side of the casing so as to reflect light radiated from the illuminating lamp towards the vicinity of a central position of the casing, and
the reflective surface is formed to be continuous from a topmost section, and at least a partial area thereof has a one-way mirror function.

2. The indirect illumination device according to claim 1, wherein
a light diffuser is provided between the reflective surface of the casing and the illuminating lamp.

3. The indirect illumination device according to claim 1 or 2, wherein
the reflective surface is a concave curved surface.

4. The indirect illumination device according to claim 1 or 2, wherein
the reflective surface is a flat surface.

5. The indirect illumination device according to any one of claims 1 to 4, wherein
an entire area of the reflective surface has a one-way mirror function.

6. The indirect illumination device according to any one of claims 1 to 4, wherein
one or a plurality of partial areas of the reflective surface have a one-way mirror function, and the other area is a total reflection area.

7. The indirect illumination device according to any one of claims 1 to 4, wherein
a number of small areas of the reflective surface have a one-way mirror function, and the areas are disposed in a distributed manner.

8. The indirect illumination device according to any one of claims 1 to 7, wherein
a proportion of reflectance to transmittance in areas of the reflective surface which have a one-way mirror function changes according to a position.

9. The indirect illumination device according to any one of claims 1 to 8, wherein
the casing has an anti-reflection coating film that is formed on an outer side of the casing.

10. The indirect illumination device according to any one of claims 1 to 8, wherein
the casing has a number of dimples that are disposed on an outer side of the casing.

11. An article inspection system comprising:
the indirect illumination device according to any one of claims 1 to 10; and
a camera that receives light having passed through the casing of the indirect illumination device to capture an image so as to inspect an article disposed inside the casing.

12. The article inspection system according to claim 11, wherein
the camera captures an image of the article from a plurality of directions while moving around the casing of the indirect illumination device, or a plurality of the cameras is provided around the casing of the indirect illumination device to capture an image of the article.
